# EUROPEAN PATENT SPECIFICATION

(11) **EP 1 323 354 B1**
(45) Date of publication and mention of the grant of the patent: **07.09.2005**
(21) Application number: 02388079.2
(22) Date of filing: 20.12.2002
(51) Int. Cl.: A23K 1/16, A23K 1/175, A23K 1/14

(54) **Natural, intestinally active feed additive**
Natürlicher, darmaktiver Futterzusatz
Additif naturel possedant une activité intestinale pour nourriture animale

(30) Priority: 28.12.2001 DK 200101962
(43) Date of publication of application: 02.07.2003
(73) Proprietor: NOR-FEED A/S, 2650 Hvidovre (DK)
(72) Inventor: Elgaard, Troels, 2660 Brondby Strand (DK); Bjornhauge Rasmussen, Anette, 2690 Karlslunde (DK)
(74) Representative: Zeuthen-Aagaard, Henrik

(56) References cited:
- EP-A- 0 320 867
- EP-A- 0 481 396
- EP-A- 0 896 797
- EP-A- 1 101 411
- EP-A- 1 129 627
- EP-A- 1 132 009
- EP-A- 1 297 751
- WO-A-99/45795
- DE-A- 10 047 563
- US-A- 4 481 226
- US-A- 6 068 862
- US-B1- 6 287 576
- DATABASE WPI Section Ch, Week 200146 Derwent Publications Ltd., London, GB; Class D13, AN 2001-427167 XP002261200 & ES 2 156 718 A (AGQ SL), 1 July 2001 (2001-07-01)
- DATABASE WPI Section Ch, Week 199332 Derwent Publications Ltd., London, GB; Class D13, AN 1993-251727 XP002261201 & HU 62 770 A (BRENNER J), 28 June 1993 (1993-06-28)
- BEREBGUER A A ET AL: "SEPIOLITE IN THE FIELD OF ANIMAL NUTRITION" PROCEEDINGS OF THE INDUSTRIAL MINERALS INTERNATIONAL CONGRESS, XX, XX, 1983, pages 37-45, XP001002480

## Description

### Technical Field

The present invention relates to an intestinally active feed additive with natural active substances, a feed mixture including the additive as well as a method of breeding farm animals.

### Background Art

It is well-known to use antibiotic or chemotherapeutic substances as so-called growth-promoters in connection with the breeding of farm animals. During recent years there has been a focus on the problems caused by the widespread use of antibiotics or chemotherapeutics as growth-promoters. More and more pathogenic micro-organisms can develop a resistance to the antibiotics in question which accordingly become less effective. As a resistance to the used types of antibiotics is developed by the micro-organisms in the farm animals, said resistant micro-organisms can subsequently be transferred to human beings via the slaughtered meat. As various species of micro-organisms can exchange properties by a transfer of small cyclic DNA plasmides, the resistant properties can accordingly be transferred to micro-organisms which are pathogenic to human beings. In connection with the handling of animal feed, a continuous intake of small amounts of antibiotic growth-promoters, such as dust, can present a serious health hazard.

A continued use of antibiotics as growth-promoters may increase the risk of an epidemic among animals and/or human beings which cannot be combatted by means of antibiotics. One of the hitherto used growth-promoters has turned out to be carcinogenic as well.

In view of these problems attempts have been made to develop alternative methods so as to ensure a disease-free breeding of farm animals without the use of antibiotics. Furthermore the use of the classic growth-promoters in the pig production has already ceased in some countries, such as in Denmark and Sweden.

This cessation of the use of conventional growth-promoters in connection with the production of piglets in the weight ratio of 6 to 35 kg has turned out to cause problems in up to 80% of all stocks. Typical symptoms are an increased treatment for diarrhoea and that the piglets do not flourish, and an increased frequency of infections, especially caused by *E. coli* or *L. intracellularis*, as well as dysentery and diseases similar to dysentery.

In order to economize on the breeding of farm animals a demand for alternative solutions exists accordingly, said alternative solutions being capable of preventing or reducing these infections and diseases in farm animals while not being encumbered with the risk of the classic growth-promoters developing a resistance in the micro-organisms. Such solutions can advantageously be based on natural active substances or substances identical to natural active substances. These substances should also have the same or preferably an improved effect on the growth and the utilization of the animal feed of the animals compared to the classic growth-promoters in order to ensure the acceptance of the farmer and of the animal feed industry.

It is a well-known fact that many plants include various functional and/or antibacterial substances, such as saponines, flavonoids, tannins, hydroxycymenes and terpenes, and it is also a well-known fact that such active substances from plant materials are utilized in drugs. In addition, it has been suggested to use such natural substances as a daily supplement to both animals and human beings. However, in many cases the effects claimed of such active plant components have not been sufficiently substantiated, and many components are only available in small quantities in the plants in question and can be too cost-intensive and/or too difficult to obtain for a prophylactic daily use as a feed supplement.

EP-A-1 129 627 discloses a feed additive composed of an oligosaccharide, a saponin-containing component obtained from a plant material of *Yucca, Quillaja, Azadirachta* and/or *Trigonella*, and an antibacterial component obtained from citrus fruits, hip, grapes, green pepper and/or plants of the labiatae family (*Lamiaceae*).

Feed additives including tannin-containing plant materials are for instance described in EP-A-0 481 396 and GB 1 073 085 dealing with a tannin-containing extract from sweet chestnut *Castanea Sativa*, and in US 6 068 862 dealing with (-)-epigallocatechingallate extracted from tea leaves.

EP-A-1 132 009 discloses a feed additive including an active component obtained from plants of the *Citrus*-genus and absorbed on a porous, mineral carrier material based on hydrated magnesium and/or aluminium silicates and being of such a nature that at least 55% by weight thereof present a particle size of between 50 µm and 700 µm.

The above feed additives revealed promising results when used as a substitute for the classic growth-promoters in connection with feeding experiments on pigs being weaned. However, these additives include relatively cost-intensive and/or rather unavailable components, which make these additives less suited for a daily use in the animal feed considering the prevailing competitive conditions in the field.

Literature reveals a multitude of proposals for improving the health, the growth and the utilization of the animal feed in connection with breeding of farm animals, but none of these proposals has turned out to be so effective that they can replace the classic growth-promoters, such as tylosin phosphate and virginiamycin.

It turned out surprisingly that it is possible to produce a feed additive by using a combination of a tannin-containing plant material and a flavonoide-containing plant material obtained from a by-product resulting from the production of wine or citrus juice, where said feed additive can match the classic growth-promoters with respect to efficiency.

### Brief Description of the Invention

The present invention relates to a natural feed additive as disclosed in claim 1.

The invention relates furthermore to a feed mixture for farm animals including the ingredients of the feed additive according to the invention together with a conventional animal feed as well as a method of breeding farm animals, where said animals are fed with such a feed mixture.

The feed additive according to the invention results in an improved growth and an improved utilization of the animal feed in connection with the breeding of healthy, but also less healthy farm animals, and an improved flourishing of less healthy farm animals.

The extent of applicability of the invention appears from the following detailed description. It should, however, be understood that the specific examples are merely included to illustrate the preferred embodiments. The scope of protection is limited by the claims.

### Detailed Description of the Invention

The feed additive according to the invention is based on natural substances and/or substances identical to natural substances in a combination which ensures flourishing and healthy farm animals in a more natural way than the one obtained by the classic growth-promoters. Thus it is possible to obtain the same daily growth as the one obtained with the classic growth-promoters while the resistance problems associated with said classic growth-promoters can simultaneously be avoided.

The additive includes various active substances which in combination are assumed to affect the composition of micro-organisms in the intestinal canal of monogastric animals. Thus the additive can be used in small quantities as an alternative to the conventional antibiotic growth-promoters in the animal feed for pigs, calves and poultry.

The use of the feed additive according to the invention results in an improved flourishing of the farm animals in form of reduced disease problems and an improved flourishing because the risk of infection has been considerably reduced. The obtained improvements match completely the effect of the conventional antibiotic growth-promoters.

Especially for young animals, such as piglets and chickens, the gastric and intestinal infections have a highly negative effect on the result of the production. Therefore, the use of antibiotic growth-promoters is still widespread in many countries, whereas Sweden and Denmark have ceased using such antibiotic growth-promoters. The use of the feed additive according to the invention instead of the known growth-promoters results in an improved working environment at the animal feed plants and in the farm animal breeding houses. In addition, an enrichment of bacteria resistant to antibiotics is avoided.

The feed additive has the effect that the microflora in the alimentary tract is stabilized, i.e. the micro-organisms having a positive effect on the flourishing of the animals have improved competitive conditions relative to pathogenic bacteria and other undesirable bacteria. In turn, such a stabilising results in a reduced frequency of diarrhoea, a reduction of the evaporation of ammonia, an improved utilization of the animal feed and an increased daily growth.

The animals cannot decompose and digest approximately 80 to 90% by weight of the tannin content, which accordingly is highly efficient throughout the entire intestinal system. The tannins present a wide-spectrum antibacterial or bacteriostatic effect and reduce thus the occurrence of intestinal infections caused by for instance *Escherichia coli, Salmonella ssp.* or *Lawsonia intracellularis*.

In addition to flavonoides, the plant materials of citrus fruits and grapes have inter alia a high content of nondegradable polysaccharides, such as pectin. These polysaccharides are metabolised in the intestinal system by bacteria. Such a specific feeding of bacteria has the effect that the bacteria are provided with energy for a synthesis of protein on the basis of ammonia. The resulting protein is incorporated in the bacteria and liberated together with the faeces. Such a protein synthesis results in a reduction of the environmentally impacting evaporation of ammonia.

In the used concentrations, the feed additive according to the invention has a general antibacterial effect. The natural-based effect mechanism implies that the additive does not assist in preserving or enriching genes for resistance to known antibiotics in pathogenic bacteria. Thus the antibacterial effect is based on a non-specified damaging of the cell surface and the DNA of the bacteria. A resistance to such an effect mechanism is of a different character than the various mechanisms resistant to known antibiotics directed towards a specific decomposing of the antibiotic in question. It is considered highly unlikely that a resistance is developed towards the natural antibacterial substances from plant materials, because these substances have been contained in the plants for thousands of years without having caused a propagation of the resistance.

The additive according to the invention reduces the possibility of the pathogenic micro-organisms of adhering to epithetical cells in the intestine so as subsequently to propagate and cause an infection. A growth-promoting effect is obtained involving an increased growth and utilization of the animal feed, and at the same time the occurrence of diseases requiring an antibiotic treatment is reduced. In addition, the production losses caused by diarrhoea are reduced. Furthermore, an environmental improvement is obtained by the reduction of ammonia leakages.

As the ingredients of the additive resulting from the selected plant materials can be provided at a price in line with the price of the known antibiotic growth-promoters, and as the effect turned out to be in line with the effect of said growth-promoters as well, the additive according to the invention can be considered a promising alternative to the problematic classic antibiotic and chemotherapeutical growth-promoters.

Tannins or tannic acids include so-called condensed tannins being derivatives of flavanols, and hydrolysable tannins being esters of a sugar, usually glucose, with one or more trihydroxybenzene carboxylic acids (gallic acid). Tannins are especially found in the cortex and the fruits of many plants and were originally obtained from gall (gallnuts) formed by the plants as a reaction to parasitic attacks. Thus the gall can include 50 to 70% of tannin.

The first active component in the feed additive according to the invention includes tannin-containing materials obtainable from a plant material originating from one or more plants selected among the genera *Aesculus, Castanea, Quercus, Juglans, Ceratonia, Vitis* and/or *Camellia*. Such plant materials can according to literature include high or low amounts of other substances possibly contributing to the activity. Particularly preferred plant materials are from the plants sweet chestnut (*Castanea sativa*), especially from the cortex, horse chestnut (*Aesculus hippocastanum*), especially from the cortex, oak (*Quercus spp.*), especially from the cortex, green tea (*Camellia sinensis*), especially from the leaves, walnut (*Juglans regia*), especially from the leaves and/or carob tree (*Ceratonia siliqua*), especially from the seeds. In addition, quillaja cortex can be mentioned which is known in particular for its saponin-content, but which also presents a significant content of tannins. The Quillaja cortex is obtained from cortex and twigs of *Quillaja saponaria* and is expected to be usable for the first active component as well.

A low-cost tannin-containing material to be used as the first active component can be obtained from a by-product resulting from the production of wine based on tannin-containing strains of *Vitis vinifera*. The by-product is the so-called pressing residue, viz. also called the Grape Pomace usable as it is or in form of a concentrated pressing residue remaining after the preparation of a number of various products, such as alcohol, citric acid and/or natural colorants.

During the production of red wine, the grape juice ferments together with the skin and the seeds. After 3 to 7 days, the juice is pressed out, and the pressing residue can be used as the tannin-containing first active component.

A preferred pressing residue product is based on red grapes. These grapes can for instance be of the types Cabernet Sauvignon, Merlot, Syrah, Pinot Noir, Lemberger or Tempranillo.

The pressing residue product can advantageously result from red grapes used by the production of white wines because the grape residues are removed from the grape juice as soon as it is at all possible after the pressing out of the grape juice. In other words, all the active substances relevant for the natural additive, including a high amount of tannins, are maintained in the pressing residue product.

If necessary, the pressing residue product can be further concentrated by a quantity of the water contained in the product being removed. This removal of water can be carried out by a filtering, an extraction, a centrifuging and by other conventional methods.

When the first active component has been obtained from plants, it can be obtained by way of drying and grinding of the parts of a plant containing the active substances, or the active substances can be obtained in another way, such as by extraction or pressing followed by an isolation and/or drying. As it is a question of natural materials, the content of the active substances may vary. However, the person skilled in the art can determine the amount of a specific tannin-containing material necessary for obtaining the desired effect on the health and flourishing of the farm animals by carrying out routine feeding experiments.

The tannin-containing plant material usable as the first active component can be the entire plant in question or usually the parts of the plant presenting a particularly high content of tannins. Thus it can be a question of the fruits of the plant, such as carob seeds, or portions thereof, such as grape pressing residues, or leaves, such as walnut, or cortex, such as oak, sweet chestnut and horse chestnut. When the cortex of a plant is utilized, the thin twigs of the plant, typically of the tree, can advantageously also be used in such a manner that the tannin-containing plant material is obtained by cutting the smallest twigs of the tree in question. As a result, it is possible to avoid the rather traumatic processing of the tree involving a peeling off of the cortex

The plant material to be used in the feed additive according to the invention can be suitably processed, such as by the parts of the plant being dried and ground to a powder. The active substances can alternatively be extracted by means of a solvent, such as an aqueous solvent, and dried into a powder under lenient conditions.

In the powder form, the first active component is usually included in the feed additive according to the invention in an amount corresponding to 50 to 5000 g/ton of animal feed, preferably 100 to 500 g/ton of animal feed.

The second active component is in the present description and claims to be construed as a material which is either a flavonoide-containing material obtainable from one or more of the fruits of the plants *Citrus* or *Vitis*, especially *Vitis vinifera* (wine). When the second active component is obtained from plants, it is obtained by drying and grinding of the parts of a plant, here the fruit, where said parts of the plant include the active substances, or the substances are obtained in another way, such as by extraction or pressing followed by isolation and/or drying. As it is a question of natural materials, the content of the active substances may vary. However, the person skilled in the art can determine the amount of a specific *Citrus* or *Vitis*-material sufficient for obtaining the desired effect on the health and flourishing of the farm animals by carrying out routine feeding experiments.

The second active component can advantageously be produced on the basis of plant materials available in large quantities and at a low cost, such as in form of residue materials resulting from the production of citrus juice or wine.

Thus it is possible to use the waste material obtained in form of solid matter-containing residues resulting from the production of citrus juice for the production of the second active component. Juice is produced by way of pressing citrus fruits from which the coloured shell inter alia containing essential oils has been removed. After pressing a residue containing solid matter is obtained as a waste material..This waste material resulting from the juice production is suitable as starting material for the active component in the feed additive according to the invention.

The second active component or a portion thereof may advantageously be in form of a concentrated extract of the above residue material from the juice production, and this extract is preferably used in an amount of 50 to 5000 g/1000 kg of animal feed.

The production of wine also results in a pressing residue with a high content of antibacterially active substances, including flavonoides, and which accordingly is suitable as starting material for the second active component. Usually, the pressing residue resulting from the production of wine is used in dried form, typically in an amount of 50 to 1000 g/1000 kg of animal feed. As mentioned above, some types of wine have furthermore a high content of tannins, and accordingly they can also be used as the tannin-containing first active component.

The first and the second active component are in most cases formed by the parts of a plant in question in dried and powdered form. However, some of the active components can alternatively be used in liquid form with the active substances in a form dissolved or dispersed in a solvent or dispersant acceptable in the animal feed, such as water or a lower alcohol.

The active plant materials in the feed additive according to the invention may advantageously be admixed a carrier material acceptable in the animal feed. Such carrier materials are preferably mineral, porous materials optionally based on hydrated magnesium and/or aluminium silicates. Examples thereof are sepiolite and other clay minerals of the sepiolite-palygorskite-family as well as zeolites, such as klinoptilolite. Such carrier materials can adsorb and absorb the active substances and release said substances at a suitable speed throughout the intestine of the animals. Moreover, the carrier materials operate such that they absorb a number of toxins in the gastro--intestinal tract of the animal, which in turn implies that they contribute to the favourable effect of the feed additive according to the present invention.

The particle size of the carrier material is not critical, but a particle size is preferred where at least 50% by weight of the particles are smaller than 1.18 mm, preferably at least 90% by weight of the particles are smaller than 1.18 mm.

The feed additive according to the invention can optionally comprise conventional adjuvants and/or additives, such as dust-reducing agents and preservatives.

The invention is illustrated in greater detail below by means of some examples.

### Example 1

For the production of 1 kg of feed additive the following materials are mixed in the dry state:

| | |
|---|---|
| Nor-Spice® AB Powder * | 125 g |
| Tannin-containing chestnut powder ** | 125 g |
| Sepiolite 100 *** | 680 g |
| Propylene glycol | 70 g |

| | |
|---|---|
| * Nor-Spice® AB Powder is a flavonoide-containing material which is a concentrated and dried by-product resulting from the production of citrus juice; supplied by Nor--Feed A/S, Hvidovre, Denmark. | |
| ** The tannin-containing chestnut powder is obtained from cortex and twigs of sweet chestnut ( *Castanea sativa* ). | |
| ***Sepiolite 100 is a fine-grained sepiolite product, where at least 90% by weight thereof have a particle size smaller than 125 µm; available from Nor-Feed A/S, Hvidovre, Denmark. | |

A mixing of the dried powdered materials results in 1000 g of additive. The additive can be used in the animal feed for pigs, poultry and calves. Usually an amount of 0.4 to 4 kg of additive is used per 1000 kg of animal feed, especially 1 to 2 kg of additive per 1000 kg of animal feed.

### Example 2

For the production of 1 kg of feed additive the following materials are mixed in the dry state:

| | |
|---|---|
| *Vitis vinifera* powder* | 150 g |
| Tannin-containing powder from *Quercus** | 140 g |
| Sepiolite 60/100*** | 670 g |
| Propylene glycol | 70 g |

| | |
|---|---|
| **Vitis vinifera* powder is a dried pressing residue resulting from the production of wine | |
| **The tannin-containing powder is obtained from oak cortex | |
| ***Sepiolite 60/100 is a sepiolite product, where at least 57% by weight have a particle size between 100 and 300 µm; available from Nor-Feed A/S, Hvidovre, Denmark. | |

A mixing of the dried powdered materials results in 1000 g of additive. The additive can be used in the animal feed for pigs, poultry and calves. Usually an amount of 0.4 to 4 kg of additive is used per 1000 kg of animal feed, especially 1 to 2 kg of additive per 1000 kg of animal feed.

### Examples 3 to 12

1 kg of feed additive to be used in animal feed for pigs, poultry and calves in an amount of 0.4 to 4 kg of additive per 1000 kg of animal feed, especially 1 to 2 kg of additive per 1000 kg of animal feed, is produced on the basis of a mixture of the materials indicated in the following Examples 3 to 12:

### Example 3

| | |
|---|---|
| Grape seed flower | 175 g |
| Carob seed flower | 350 g |
| Sepiolite | 405 g |
| Sunflower oil | 70 g |

### Example 4

| | |
|---|---|
| Red wine pressing residue | 190 g |
| Chestnut powder * | 500 g |
| Sepiolite | 240 g |
| Sunflower oil | 70 g |

| | |
|---|---|
| * powder obtained from cortex and twigs of sweet chestnut ( *Castanea sativa* ). | |

### Example 5

| | |
|---|---|
| Citrus pressing residue | 250 g |
| Tannin-containing powder | 125 g |
| Zeolite | 555 g |
| Propylene glycol | 70 g |

### Example 6

| | |
|---|---|
| Nor-Spice® AB powder | 500 g |
| Powder from walnut* | 125 g |
| Bentonite | 405 g |
| Rape oil** | 70 g |

| | |
|---|---|
| * ground leaves of walnut (*Juglans regia*). | |
| ** Danish rape oil without GMO (genetically modified organisms) | |

### Example 7

| | |
|---|---|
| Nor-Spice® AB powder | 150 g |
| Chestnut powder | 300 g |
| Klinoptilolite | 480 g |
| Propylene glycol | 70 g |

### Example 8

| | |
|---|---|
| White wine pressing residue | 200 g |
| Oak powder* | 430 g |
| Sepiolite | 300 g |
| Rape oil** | 70 g |

| | |
|---|---|
| * powder obtained from cortex and twigs of oak (*Quercus spp*).. | |
| ** Danish, GMO-free | |

### Example 9

| | |
|---|---|
| Dried ground citrus shells | 250 g |
| Horse Chestnut powder * | 470 g |
| Zeolite | 210 g |
| Sunflower oil | 70 g |

| | |
|---|---|
| * powder obtained from cortex and twigs of horse chestnut ( *Aesculus hippo- castanum* ). | |

### Example 10

| | |
|---|---|
| Nor-Spice® AB powder | 125 g |
| *Camellia sinensis** | 275 g |
| Sepiolite | 530 g |
| Rape oil** | 70 g |

| | |
|---|---|
| * ground leaves | |
| ** Danish, GMO-free | |

### Example 11

| | |
|---|---|
| Nor-Spice® AB powder | 125 g |
| Spraydried chestnut powder | 65 g |
| Wine pressing residue* | 155 g |
| Sepiolite 100 | 300 g |
| Klinoptilolite (0 to 0.3 mm) | 295 g |
| Propylene glycol | 60 g |

| | |
|---|---|
| * Pressing residue from the production of wine after preparation of alcohol and colorants. | |

### Example 12

| | |
|---|---|
| Nor-Spice® AB powder | 125 g |
| Wine pressing residue* | 200 g |
| Sepiolite 100 | 675 g |

| | |
|---|---|
| * Pressing residue from the production of wine after preparation of alcohol and colorants. | |

### Feeding experiments

In order to test the feed additive according to the invention, a number feeding experiments have been carried out. These feeding experiments were performed on healthy and sound pigs as well as on less healthy pigs. Within the agriculture it is widely held that additives contributing to an increased growth of healthy animals also have an effect on less healthy or even sick animals.

### Feeding experiment 1

A feeding experiment has been carried out on pigs by means of the feed additive according to Example 1. The feeding experiment lasted 21 days.

A control group of 30 pigs were fed with a mixture not containing a growth-promoter and composed of barley, wheat, low-ash fishmeal, lard and Danstart® 250 (a mixture of vitamins and minerals available from Dansk Vilomix A/S, Hornslet, Denmark) and with 1.24 FEs per kg (FEs is a Danish unit for animal feed). The test group of 30 pigs were fed with the same animal feed admixed the feed additive of Example 1 in an amount of 2 kg/1000 kg of animal feed. Both groups of pigs were healthy and sound at the beginning and the end of the experiment.

The results of the feeding experiments appear from Table 1 below.

**Table 1**

| | Control group | Test group | Difference % |
|---|---|---|---|
| Number of pigs | 30 | 30 | 0 |
| Average weight at the beginning (kg) | 8.16 | 7.96 | -2.5 |
| Average weight at the end (kg) | 11.86 | 12.03 | +1.4 |
| Growth per pig (kg) | 3.70 | 4.07 | +9.9 |
| Growth per day per pig (g) | 176 | 194 | +9.9 |
| Feed consumption per pig per day FEs | 0.38 | 0.38 | 0 |
| Feed per kg growth FEs | 2.14 | 1.96 | -8.4 |

### Feeding experiment 2

A feeding experiment has been carried out on pigs by means of the feed additive according to Example 1. The feeding experiment lasted 21 days. A control group of 23 pigs were fed with a mixture of 37% of barley, 37% of wheat and 26% of supplementary feed of the brand "Soya Super" available from "Østjysk Andel". 1 kg of this animal feed corresponds to 1.05 FEs. The test group of 23 pigs were fed with the same animal feed admixed the feed additive of Example 1 in an amount of 2 kg/1000 kg of animal feed. Already after 3 to 4 days, a visual difference was observed between the two groups of pigs. Thus the pigs of the test group were more healthy-looking and flourishing than the control group throughout the entire test period.

The results of the feeding experiments appear from Table 2 below.

**Table 2**

| | Control group | Test group | Difference % |
|---|---|---|---|
| Number of pigs | 23 | 23 | 0 |
| Average weight at the beginning (kg) | 30.2 | 30.1 | -0.3 |
| Average weight at the end (kg) | 43.8 | 44.7 | +2.1 |
| Growth per pig (kg) | 13.60 | 14.60 | +7.4 |
| Growth per day per pig (g) | 648 | 695 | +7.4 |
| Feed consumption per pig per day FEs | 1.38 | 1.44 | +4.3 |
| Feed per kg growth FEs | 2.13 | 2.07 | -2.8 |

### Feeding experiment 3

A feeding experiment was carried out for 21 day by feeding pigs being subject to a weaning by means of a weaning mixture of wheat, barley, a fatty by-product, fishmeal, rape seeds and fat, containing 1.24 FEs per kg. The control group received the feed mixture alone, whereas the test group received the same animal feed with 2 kg of feed additive according to Example 1 per ton of animal feed. The results appear from Table 3.

**Table 3**

| | Control group | Test group | Difference % |
|---|---|---|---|
| Number of pigs at the beginning | 28 | 28 | 0 |
| Average weight at the beginning (kg) | 8.50 | 8.36 | -1.6 |
| Number of pigs at the end | 27 | 28 | +3.7 |
| Average weight at the end (kg) | 11.81 | 12.64 | +7.0 |
| Total growth (kg) | 88 | 120 | +36.36 |
| Number of pig days | 578 | 588 | +1.73 |
| Growth per day per pig (g) | 152.2 | 204.1 | +34.04 |
| Total consumption of animal feed (kg) | 189.1 | 184.0 | -2.70 |
| Total consumption of animal feed FEs | 234.5 | 228.2 | -2.70 |
| Feed consumption per pig per day (kg) | 0.33 | 0.31 | -4.35 |
| Feed per kg growth FEs | 2.15 | 1.53 | -28.64 |
| Feed consumption per pig per day FEs | 0.41 | 0.39 | -4.35 |
| Feed per kg growth FEs | 2.66 | 1.90 | -28.64 |

### Feeding Experiment 4

A comparison test was carried out for 21 days by feeding less healthy pigs which had been subjected to a weaning very early. These pigs were fed with an animal feed mixed at home and including 1.288 FEs per kg. The home-mixed animal feed was composed as follows. Group A: 2 kg of feed additive according to Example 1/ton of animal feed; Group B: 250 g/ton of tannin powder; and group C: 250 g/ton of citrus product. The results appear from Table 4.

**Table 4**

| | Group A acc. to the invention | Group B tannin | Group C citrus |
|---|---|---|---|
| Number of pigs | 70 | 70 | 70 |
| Average weight at the beginning (kg) | 5.61 | 5.80 | 5.69 |
| Average weight at the end (kg) | 8.34 | 8.00 | 7.64 |
| Growth per pig (kg) | 2.73 | 2.20 | 1.95 |
| Growth per day per pig (g) | 129.7 | 104.8 | 96.7 |
| Feed consumption per pig per day FEs | 0.41 | 0.40 | 0.42 |
| Feed per kg growth FEs | 3.17 | 3.84 | 4.32 |

The livestock suffered from serious health problems which resulted in a poor level of all the production results. Despite these problems, the results were significantly improved in Group A, and compared to Group A the Groups B and C presented a growth per day per pig of 81% and 75% as well as an increased consumption of animal feed of 1.21% and 1.36%, respectively.

### Feeding Experiment 5

A feeding experiment was carried out for 7 days by feeding pigs being 5 weeks old at the beginning of the experiment. A feed mixture was used of barley, wheat, fishmeal, fat and DANSTART® with 1.24 FEs per kg. The control group received the feed mixture alone, whereas the test group received the same animal feed with 2 kg of feed additive according to Example 1 per ton of animal feed. The results appear from Table 5.

**Table 5**

| | Control group | Test group | Difference % |
|---|---|---|---|
| Number of pigs | 27 | 27 | 0 |
| Average weight at the beginning (kg) | 10.07 | 9.67 | -4.0 |
| Average weight at the end (kg) | 11.59 | 11.44 | +1.3 |
| Growth per pig (kg) | 1.52 | 1.77 | +17.1 |
| Growth per day per pig (g) | 217 | 254 | +17.1 |
| Feed consumption per pig per day FEs | 0.61 | 0.62 | +2.3 |
| Feed per kg growth FEs | 2.80 | 2.44 | -14.5 |

### Feeding Experiment 6

A feeding experiment was carried out at a Danish test farm with the feed additive according to Example 11 in the animal feed for prefatteners from 14 August to 24 August 2002, i.e. 10 days. The control group of 30 pigs received an animal feed with 1.16 of animal feed units (FEs) per kg without growth-promoters. The test group of 30 pigs received the same animal feed admixed 2 kg of the additive according to Example 11 per ton of animal feed. The results appear from Table 6.

**Table 6**

| | Control group | Test group | Difference % |
|---|---|---|---|
| Number of pigs | 30 | 30 | 0 |
| Average weight at the beginning (kg) | 6.9 | 7.0 | 1.0 |
| Average weight at the end (kg) | 8.1 | 8.4 | 3.3 |
| Growth per pig (kg) | 1.2 | 1.4 | 16.2 |
| Growth per day per pig (g) | 123 | 143 | 16.2 |
| Feed consumption per pig per day FEs | 0.20 | 0.22 | 8.7 |
| Feed per kg growth FEs | 1.61 | 1.50 | -7.0 |

It is evident that the feed additive according to the invention had a strong effect on the growth of the pigs as well as a significant effect on the consumption and the utilization of the animal feed.

### Feeding Experiment 7

A feeding experiment was carried out at a Danish test farm for 28 days during the period 25 September 2002 to 23 October 2002.

The experiment was carried out on 4 groups of pigs with 30 pigs in each group at the beginning of the experiment. The groups received the same type of animal feed. The four groups included:
* *Group 1*: Negative control group,
* *Group 2*: Received an animal feed where each ton of animal feed was admixed a wine-based tannin-containing additive including 700 g of pressing residue from the production of wine and admixed 1300 g of carrier of the type "Sepiolite 100",
* *Group 3:* Received an animal feed where each ton of animal feed was admixed 700 g of the citrus-based additive Nor-Spice® AB Powder, admixed 1300 g of carrier of the type "Sepiolite 100",
* *Group 4:* Received an animal feed where each ton of animal fee was admixed 2 kg of the additive according to Example 12 corresponding to 400 g of the additive of the type tannin-containing wine pressing residue plus 250 g of the additive of the type Nor-Spice® AB Powder, viz. a total of 650 g of additive, admixed 1350 g of carrier of the type "Sepiolite 100".

The results of the test appear from Table 7.

**Table 7**

| | **Group 1** Control | **Group 2** wine pressing residue | **Group 3** citrus | **Group 4** wine pressing residue + citrus according to the invention |
|---|---|---|---|---|
| Average weight at the beginning (kg) | 6.7 | 6.7 | 6.5 | 6.7 |
| Average weight at the end | 11.2 | 10.9 | 11.5 | 11.9 |
| Growth, kg average | 3.5 | 3.2 | 5.0 | 5.2 |
| Growth per day per pig (g) | 135 | 126 | 146 | 153 |
| Consumption of animal feed, kg total | 255 | 236 | 280 | 259 |
| Feed/kg growth | 1.89 | 1.87 | 1.92 | 1.69 |

It is evident from the experiment that
* the addition of 700 g of wine pressing residue per se has a distinctly negative effect on the growth and consumption of animal feed of the pigs, whereas the effect on the utilization of the animal feed of the pigs is slightly negative, but by and large neutral,
* the addition of 700 g of citrus-based additive (Nor-Spice® AB Powder) per se has a positive effect on the growth and consumption of animal feed of the pigs, but nevertheless a slightly negative effect on the utilization of the animal feed of the pigs,
* the addition of 400 g of wine pressing residue and 250 g of citrus-based additive (Nor-Spice® AB Powder), i.e. a total of only 650 g of active substances, demonstrated a distinctly higher growth of the test group than the control group and a consumption of animal feed by and large corresponding to the consumption of animal feed of said control group and consequently a clearly more efficient utilization of the animal feed in said test group.

The experiment reveals a distinct, surprising and synergistic effect between the tannin-containing wine pressing residue and the flavonoide-containing component from citrus.

## Claims

1. A natural feed additive including natural active substances, said feed additive including
a) 50 - 5000 g of a first active component containing tannin and obtained from a plant material originating from one or more plants selected among the genera *Aesculus, Castanea, Quercus, Juglans, Ceratonia, Vitis* and/or *Camellia,* and
b) 50 - 5000 g of a second active component containing flavonoids and obtained from a plant material originating from one or more plants selected among citrus fruits and grapes,
and optionally conventional adjuvants or additives,
in the amount of the feed additive to be used for 1000 kg of animal feed.

2. A feed additive according to claim 1, **characterised in that** the tannin-containing first active component is obtained from a plant material originating from sweet chestnut (*Castanea sativa*), horse chestnut (*Aesculus hippocastanum*), oak cortex (*Quercus spp.*), green tea (*Camellia sinensis*), grapes (*Vitis vinifera*), walnut leaves (*Juglans regia*) and/or carob tree (*Ceratonia siliqua*)

3. A feed additive according to claim 1, **characterised in that** the tannin-containing first active component is obtained from a plant material originating from sweet chestnut (*Castanea sativa*), and that the flavonoid-containing second active component is obtained from a plant material obtained from a by-product resulting from the production of citrus juice.

4. A feed additive according to claim 1, **characterised in that** the tannin-containing first active component is obtained from a plant material originating from grapes (*Vitis vinifera*), and that the flavonoide-containing second active component is obtained from a plant material provided as a by-product resulting from the production of citrus juice.

5. A feed additive according to claim 1, **characterised in that** the tannin-containing first active component is obtained from a plant material originating from sweet chestnut (*Castanea sativa*), and that the flavonoid-containing second active component is obtained from a plant material provided as a by-product resulting from the production of wine.

6. A feed additive according to claim 1, **characterised in that** the amount of feed additive to be used for 1000 kg of animal feed includes
100 - 500 g of the first active component and
100 - 500 g of the second active component.

7. A feed additive according to any of the preceding claims, **characterised in that** it includes a carrier material acceptable for animal feed.

8. A feed additive according to claim 7, **characterised in that** the carrier material is a clay mineral, preferably of the type sepiolite, or zeolite, preferably of the type klinoptilolite.

9. Feed mixture for farm animals comprising the ingredients of the feed additive according to any of the claims 1 to 8 together with a conventional animal feed.

10. Feed mixture according to claim 9 comprising 0.4 to 4 kg of a feed additive per 1000 kg of feed mixture.

11. A method of breeding farm animals, **characterised in that** the animals are fed with a feed mixture according to claim 9 or 10.

## Patentansprüche

1. Natürlicher Futterzusatz der natürliche Wirksubstanzen umfasst, wobei der Futterzusatz umfasst:
a) 50 - 5000 g eines ersten Wirkstoffs, der Tannin enthält und aus einem pflanzlichen Material erhalten ist, das von einer oder mehreren Pflanzen stammt, die ausgewählt sind aus den Gattungen *Aesculus, Castanea, Quercus, Juglans, Ceratonia, Vitis* und/oder *Camellia*, und
b) 50 - 5000 g eines zweiten Wirkstoffs der Flavonoide enthält und aus einem pflanzlichen Material erhalten ist, das aus einer oder mehreren Pflanzen stammt, die ausgewählt sind aus Zitrusfrüchten und Weintrauben,
und gegebenenfalls herkömmliche Hilfsstoffe oder Zusätze,
in der Menge des Futterzusatzes, die für 1000 kg Tierfutter zu verwenden ist.

2. Futterzusatz nach Anspruch 1, **dadurch gekennzeichnet, dass** der Tanninhaltige erste Wirkstoff aus einem pflanzlichen Material erhalten ist, das aus Esskastanie (*Castanea sativa*), Roßkastanie (*Aesculus hippocastanum*), Eichenrinde (*Quercus spp.*), Grüntee (*Cameilia sinensis*), Weintrauben (*Vitis vinifera*), Walnussblättern (*Juglans regia*) und/oder Johannisbrotbaum (*Ceratonia siliqua*) stammt.

3. Futterzusatz nach Anspruch 1, **dadurch gekennzeichnet, dass** der Tanninhaltige erste Wirkstoff aus einem pflanzlichen Material erhalten ist, das aus Esskastanie (*Castanea sativa*) stammt, und dass der Flavonoid-haltige zweite Wirkstoff aus einem pflanzlichen Material erhalten ist, das aus einem Nebenprodukt, das von der Herstellung von Zitrussaft stammt, erhalten ist.

4. Futterzusatz nach Anspruch 1, **dadurch gekennzeichnet, dass** der Tanninhaltige erste Wirkstoff aus einem pflanzlichen Material erhalten ist, das aus Weintrauben (*Vitis vinifera*) stammt, und dass der Flavonoid-haltige zweite Wirkstoff aus einem pflanzlichen Material erhalten ist, das aus einem Nebenprodukt, das von der Herstellung von Zitrussaft stammt, erhalten ist.

5. Futterzusatz nach Anspruch 1, **dadurch gekennzeichnet, dass** der Tanninhaltige erste Wirkstoff aus einem pflanzlichen Material erhalten ist, das aus Esskastanien (*Castanea sativa*) stammt, und dass der Flavonoid-haltige zweite Wirkstoff aus einem pflanzlichen Material erhalten ist, das als Nebenprodukt, welches von der Weinherstellung stammt, bereitgestellt wird.

6. Futterzusatz nach Anspruch 1, **dadurch gekennzeichnet, dass** die Menge an Futterzusatz, die für 1000 kg Tierfutter zu verwenden ist
100 - 500 g des ersten Wirkstoffs und
100 - 500 g des zweiten Wirkstoffs umfasst.

7. Futterzusatz nach einem der vorhergehenden Ansprüche, **dadurch gekennzeichnet, dass** er ein für Tierfutter annehmbares Trägermaterial enthält.

8. Futterzusatz nach Anspruch 7, **dadurch gekennzeichnet, dass** das Trägermaterial ein Tonmineral, bevorzugt vom Typ Sepiolit oder Zeolit, bevorzugt vom Typ Klinoptilolit ist.

9. Futtermischung für Nutztiere, welche die Bestandteile des Futterzusatzes nach einem der Ansprüche 1 bis 8 zusammen mit einem herkömmlichen Tierfutter umfasst.

10. Futtermischung nach Anspruch 9, welche 0,4 bis 4 kg eines Futterzusatzes pro 1000 kg Futtermischung umfasst.

11. Nicht-therapeutisches Verfahren zum Züchten von Nutztieren, **dadurch gekennzeichnet, dass** die Tiere mit einer Futtermischung nach Anspruch 9 oder 10 gefüttert werden.

## Revendications

1. Additif alimentaire naturel comprenant des substances actives naturelles, ledit additif alimentaire comprenant
a) 50-5000 g d'un premier composant actif contenant du tanin et obtenu à partir d'un matériel végétal provenant d'une ou de plusieurs plantes sélectionnées parmi les genres *Aesculus, Castanea, Quercus, Juglans, Ceratonia, Vitis* et/ou *Camellia,* et
b) 50-5000 g. d'un second composant actif contenant des flavonoïdes et obtenu à partir d'un matériel végétal provenant d'une ou de plusieurs plantes sélectionnées parmi des agrumes et des raisins,
et en option des adjuvants ou des additifs classiques,
selon la quantité d'additifs alimentaires devant être utilisés pour 1000 kg de nourriture animale.

2. Additif alimentaire selon la revendication 1, **caractérisé en ce que** le premier composant actif contenant du tanin est obtenu à partir d'un matériel végétal provenant de la châtaigne (*Castanea saliva*), du marronnier (*Aesculus hippocastanum*), du cortex de chêne (*Quercus spp*.), de thé vert (*Camellia sinensis*), de raisins (*Vitis vinifera*), de feuilles de noyer (*Juglans regla*) et/ou de caroubier (*Ceratonia Siliqua*).

3. Additif alimentaire selon la revendication 1, **caractérisé en ce que** le premier composant actif contenant du tanin est obtenu à partir d'un matériel végétal provenant de la châtaigne (*Castanea sativa*), et **en ce que** le second composant actif contenant des flavonoïdes est obtenu à partir d'un matériel végétal obtenu à partir d'un produit dérivé issu de la production de jus d'agrume.

4. Additif naturel selon la revendication 1, **caractérisé en ce que** le premier composant actif contenant du tanin est obtenu à partir d'un matériel végétal provenant de raisins (*Vitis vinifera*), et **en ce que** le second composant actif contenant des flavonoïdes est obtenu à partir d'un matériel végétal fourni en tant que produit dérivé issu de la production de jus d'agrume.

5. Additif alimentaire selon la revendication 1, **caractérisé en ce que** le premier composant actif contenant du tanin est obtenu à partir d'un matériel végétal provenant de la châtaigne (*Castanea sativa*), et **en ce que** le second composant actif contenant des flavonoïdes est obtenu à partir d'un matériel végétal fourni en tant que produit dérivé issu de la production de vin.

6. Additif alimentaire selon la revendication 1, **caractérisé en ce que** la quantité d'additifs alimentaires devant être utilisée pour 1000 kg de nourriture animale comprend :
100-500 g du premier composant actif et
100-500 g du second composant actif.

7. Additif alimentaire selon l'une quelconque des revendications précédentes, **caractérisé en ce qu'**il comprend un matériau de support acceptable pour de la nourriture animale.

8. Additif alimentaire selon la revendication 7, **caractérisé en ce que** le matériau de support est un minéral d'argile, de préférence du type sépiolite ou zéolite, de préférence du type clinoptilolite.

9. Mélange alimentaire pour des animaux d'élevage comprenant les ingrédients de l'additif alimentaire selon l'une quelconque des revendications 1 à 8 conjointement avec une nourriture animale classique.

10. Mélange alimentaire selon la revendication 9 comprenant 0,4 à 4 kg d'un additif alimentaire pour 1000 kg de mélange alimentaire.

11. Méthode non thérapeutique d'élevage d'animaux d'élevage, **caractérisé en ce que** les animaux sont nourris avec un mélange alimentaire selon la revendication 9 ou 10.
